# EUROPEAN PATENT APPLICATION

(11) **EP 1 275 488 A1**
(43) Date of publication of application: **15.01.2003**
(21) Application number: 02077761.1
(22) Date of filing: 09.07.2002
(51) Int. Cl.: B29C 59/04

(54) **A method for making holograms and holograms**

(30) Priority: 10.07.2001 IT MI20011471
(71) Applicant: Hologics S.r.l., 20100 Milano (IT)
(72) Inventor: Orlandi, Raul Maria, 20023 Cerro Maggiore, MI (IT)
(74) Representative: Arena, Giovanni

(57) **Abstract**

The system for production of thermoplastic film bearing microengravings on both sides foresees of the following stages:
- impression of the microengravings on one side of the film by an embossing process performed on a first embossing unit at a first temperature and a first pressure falling within the range of temperatures and pressures normally used for embossing of film produced from said material, and
- impression of the microengravings on the other side of the film by a subsequent embossing process performed on a second embossing unit at a second temperature considerable lower than said first temperature and a second pressure considerably higher than said first pressure with said second temperature and pressure being chosen in such a manner that said subsequent process does not affect the microengravings impressed in the first process.

## Description

The present invention relates to an integrated system for production of thermoplastic film bearing microengravings on both sides and to the products obtained thereby.

There are known processes for embossing thermoplastic films aimed at impressing microengravings on the film to obtain special optical effects such as holograms, microdiopters et cetera.

These microengraving processes have until now involved only one side of the film because of the objective technological difficulty met with in attempting to make microengravings on the second side as well.

Indeed, if for two-sided embossing an embossing unit is used obtained from the conventional unit by replacing the counterthrust cylinder with another embossing cylinder in order to produce a microengraving simultaneously on both sides, the result would be that the microengravings impressed on one side would produce a deforming effect on the microengravings impressed on the other side. But if it were sought to carry out the embossing on both sides in two stages by the conventional procedures, i.e. embossing one side in a first stage and embossing the second side in a second stage the second embossing process would cancel the microengravings impressed on the thermoplastic material during the first process because of the high temperatures normally used to perform the process.

The general purpose of the present invention is to remedy the above mentioned shortcomings by making available an embodiment of an integrated system for production of thermoplastic film which would allow microengraving of both sides of the film and secure thereby film producing special optical effects.

In particular the system aims to allow impression on both sides of the film of microengravings having a profile of semi-cylindrical diopters or any optical unit of microlenses even of an unconventional type such as spherical or elliptical diopters, interferential microengravings, holographs, anticounterfeiting, or microlens optical units creating effects of reflection and transmission of light and images, mono- or multidirectional retroreflector or multidirectional microengravings to increase the visibility distance of images or signals.

The integrated system in accordance with the present invention for the production of thermoplastic film bearing microengravings on both sides foresees for this purpose as the more general solution idea a production process consisting the following stages:
- impression of the microengravings on one side of the film by an embossing process performed at a first temperature and a first pressure within the range of temperatures and pressures normally used for embossing of film produced from said material, and
- impression of the microengravings on the other side of the film by a subsequent embossing process performed at a second temperature considerable lower than said first temperature and a second pressure considerably higher than said first pressure with said second temperature and pressure being chosen in such a manner that said subsequent process does not alter the microengravings impressed in the first process.

To better clarify the purposes and characteristics of the device in accordance with the present invention exemplifying embodiments thereof are described below and illustrated in the annexed drawings wherein:
- FIG 1: shows an example of a system in accordance with the present invention of manufacturing of film bearing microengravings on both sides,
- FIG 2: shows an example of a first product producible by the process in accordance with the present invention, and
- FIG 3: shows an example of a second product producible by the same process.

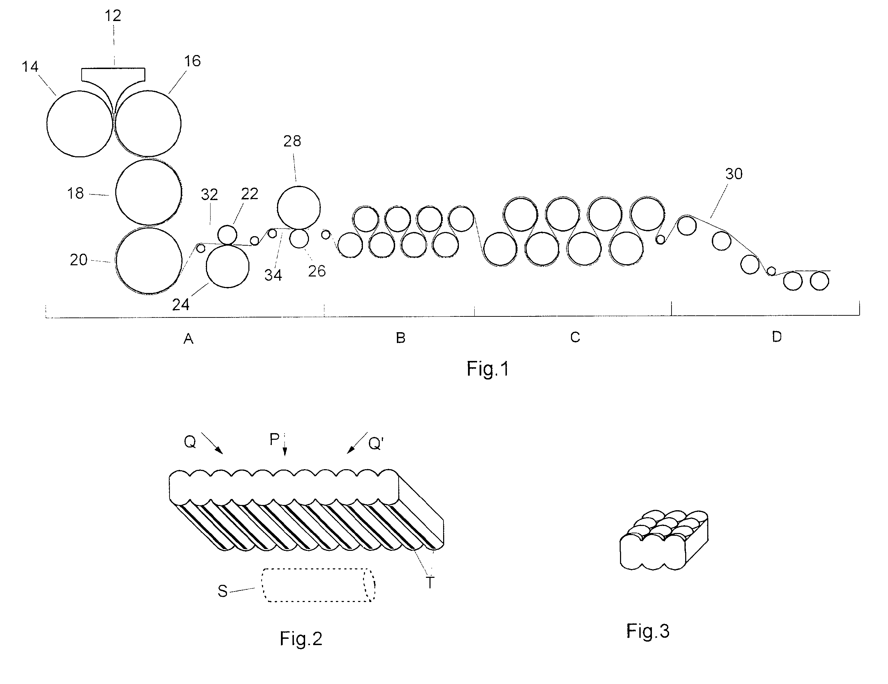

With reference to the FIGS FIG 1 shows a diagram of a system in accordance with the present invention for manufacturing polyvinyl chloride (PVC) film 30 bearing microengravings on both sides. The first section A therein concerns an extrusion unit and an embossing unit. The extrusion unit comprises a melting vat 12 and calendaring rollers 14, 16, 18, 20. The embossing unit comprises a first embossing roller 22, a counterthrust cylinder 24, a second embossing roller 26 and a second counterthrust cylinder 28.

Sections B and C show a first and second sets respectively of cooling cylinders while section D shows a set of conditioning cylinders.

The PVC film is composed of polyvinyl chloride mixed with dioctyl phthalate as the plastifier, conventional lubricant, and stabilizer with a cadmium/barium base.

The mixture passes through the vat 12 where it is brought to melting temperature. It then passes through a set of openings between the heated cylinders 14, 16, 18 and 20 with a forced action of the polymer in the openings between the cylinders 14, 16, 18 and 20 heated by the conventional methods applied for heating thereof. These cylinders are kept at a temperature such that the film leaves the cylinder 20 at a temperature of 174°C. Both embossing cylinders 22 and 24 are cooled by conventional methods to a temperature of 75°C ± 5°C.

The first embossing cylinder 22 has engraved on its surface a structure in the form of thin semi-cylindrical diopters in such a manner as to leave on the thermoplastic film 30 an impress in relief on the surface 32 of the film.

The pressure between the first embossing cylinder 22 and the respective counterthrust cylinder 24 is approximately 150psi.

Both the second embossing cylinder 26 and the counterthrust cylinder 28 are cooled by conventional techniques to around 40°C ±5°C.

The second embossing roller 26 also bears an engraving of thin semi-cylindrical diopters with negative profile so as to engrave the other surface 34 of the film 30.

The pressure between the second embossing cylinder 26 and the associated counterthrust cylinder 28 is approximately 350psi.

The distance measured on the film between the first engraving on the unit 22/24 and the second engraving on the unit 26/28 is approximately 65cm.

The above mentioned parameters allow engraving of both the first surface 32 and the second surface 34 of the film 30.

The counterthrust cylinders 24 and 28 are generally of rubber with a shore hardness around 80°.

The embossing cylinders 22 and 26 can be steel engraved with a grinding wheel or copper engraved with a grinding wheel or by laser photoengraving and subsequently chrome plated for hardening or they can have an application of nickel plates engraved with optical, holographic, interferential or diffractive et cetera structures.

After the double engraving the film 30 travels at a speed around 24 meters per minute when passing through two sets of cooling cylinders A and B cooled by conventional methods to allow the film to stabilize at a constant thickness.

Lastly the film 30 passes through a set of rollers C in which it is definitively conditioned.

FIG 2 is an enlarged cross section and perspective view showing diagrammatically how the film appears at the end of the two embossing processes with the semi-cylindrical engravings having a frequency of approximately 5 semi-cylindrical reliefs per mm of film while a small section thereof is shown in the figure.

It shows that by the previous example of application of the system in accordance with the present invention a new product consisting of a film of transparent material was obtained in which microengravings are impressed on both sides in the form of contiguous semi-cylinders to provide a set of cylindrical microlenses each having the focus in an limit of the diameter of the lens.

This particular surface engraving impressed on the film has large relief because it can lend itself to special optical effects as described in Italian patents numbers 1.217.385 and 1.230.390 in the name of the author of the present invention. Indeed, if the film thus engraved is made of transparent PVC the impressing on one side thereof, for example the under side, performed by conventional impressing methods with any motif or graphic composition, will only affect the crest of the semi-cylinders located on that side as shown diagrammatically in FIG 2 in parallel gray lines T. The resulting effect will be that if the film is used for example to wrap an object S while keeping the impressed side turned towards the interior of the package, if an observer looks at the package in a direction virtually perpendicular to the film surface (direction P in FIG 2) he will see only the impressed graphic composition whereas if he looks in an oblique direction (directions Q and Q' of FIG 2) he will see only the underlying object S.

In addition, if the graphic motif is impressed on the under side of the film 30 by the procedures described in the above mentioned patents to allow a three-dimensional or dynamic view of the graphic motif, in addition to said possibility of seeing through the embossed film it will be possible to see the graphic motif with three-dimensional or kinetic effect.

As a further example FIG 3 shows diagrammatically an enlarged cross section and perspective view of a possible application of the two-sided microengraving system in accordance with the present invention. This example requires that a transparent PVC film be embossed on both sides with microengravings in the form of small spherical caps close together. This second application example of the system in accordance with the present invention shows the possibility of obtaining a new product consisting of a film of transparent material in which microengravings in the form of contiguous spherical caps are impressed on both sides to obtain a set of spherical microlenses each having its focus in one limit of the lens diameter. This new product offers various application possibilities.

If for example a thin metallic film is applied on on one side of this film with microengravings it can be usefully used as a retroreflector in road, civil and industrial signaling because it considerably increases the visibility distance of these signals.

Another example of the use of the film of FIG 3 would be to record and subsequently project the three-dimensional image of an object. Indeed, to record the three-dimensional image of the object it suffices to cover a side of the film with a photosensitive emulsion, place the film in a dark room equipped with a focal plane shutter and then take a photograph of the object. After developing the film thus exposed it appears upon microscopic examination that opposite each microlens a complete microimage of the object was memorized in the photosensitive material, each one taken from a different angle. Then illuminating the film from the back with any light source the three-dimensional image of the photographed object will be projected in front of it.

Another example of application of the two-sided microengraving system in accordance with the present invention is production of holograms by combining two microengravings on both sides of a film, which are consequently particularly resistant against counterfeiting attempts.

Naturally the embossing system described above was given as an example.

Indeed the main parameters selected for carrying out the first and second embossing processes and in particular the pressures and temperatures could be selected within broad ranges. The essential condition is that the first temperature (for the first embossing process) be higher than the second temperature (for the second process) and that the first pressure be lower than the second pressure, the choice of the pressure and temperature combination for the second embossing unit having to be performed in such a manner that in the second unit the first engraving made with the first unit is not distorted or destroyed.

In particular the temperature and pressure of the first embossment process can be selected between 60°C and 90°C and between 120psi and 190psi respectively.

The temperature and pressure of the second embossing process can be chosen in a range of 30°C to 50°C and between 320psi and 390psi respectively.

As regards the distance between the first and second embossing units it is appropriate that they be placed near to limit temperature losses of the film as it passes from one unit to the other. It is observed on this subject that it is appropriate that the distance between the two microengraving points measured on the film be chosen in a range between 30cm and 120cm.

The system was optimized for PVC films but by appropriately setting the temperature and pressure it can be used equally satisfactorily for PET resins, polyethylene, polypropylene, or for any thermoplastic material preserving the memory of the engraving including the thermoplastic lacquers spread on both surfaces of a support film.

The system lends itself to realization on both surfaces of a thermoplastic film of spherical, elliptical, rhomboid or holographic diopters and any optical unit of microlenses which create effects of reflection and transmission of light and images, microengravings for stocking in formations, even cryptal, and microengravings designed to ensure the originality and freedom from counterfeiting of documents.

## Claims

1. A system for production of thermoplastic film bearing microengravings on both sides, consisting of the following stages:
- impression of the microengravings on one side of the film by an embossing process performed on a first embossing unit at a first temperature and a first pressure falling within the range of temperatures and pressures normally used for embossing of film produced from said material, and
- impression of the microengravings on the other side of the film by a subsequent embossing process performed on a second embossing unit at a second temperature considerable lower than said first temperature and a second pressure considerably higher than said first pressure with said second temperature and pressure being chosen in such a manner that said subsequent process does not affect the microengravings impressed in the first process.

2. A system in accordance with claim 1 in which the film reaches the first embossing unit preheated by a set of preheating cylinders and after emerging from the second unit is forwarded to a set of cooling and conditioning cylinders.

3. A system in accordance with claim 1 in which the distance between the first and second embossing units is chosen so as to limit temperature losses which occur in the passing of the film from the first to the second embossing unit.

4. A system in accordance with one of the above claims in which the thermoplastic material making up the film is polyvinyl chloride.

5. A system in accordance with claim 4 in which the working temperature and pressure of the first embossing unit are between 60°C and 90°C and between 120psi and 190psi respectively.

6. A system in accordance with claim 4 in which the working temperature and pressure of the second embossing unit are between 30°C and 50°C and between 320psi and 390psi respectively.

7. A system in accordance with claim 5 in which the working temperature and pressure of the first embossing unit are around 75°C and 150psi respectively.

8. A system in accordance with claim 6 in which the working temperature and pressure of the second embossing unit are around 40°C and 350psi respectively.

9. A system in accordance with claim 4 in which the distance between the first and second embossing units measured along the section of film included between them is between 30cm and 120cm.

10. A system in accordance with claim 9 in which said distance is 65cm.

11. A film of transparent material on which microengravings in the form of contiguous semicylinders are impressed on both its sides to obtain a set of cylindrical microlenses each having its focus in one limit of the lens diameter.

12. A film of transparent material on which microengravings in the form of contiguous spherical caps are impressed on both sides to obtain a set of spherical microlenses each having its focus in one limit of the lens diameter.
